# EUROPEAN PATENT APPLICATION

(11) **EP 2 066 075 A1**
(43) Date of publication of application: **03.06.2009**
(21) Application number: 07022966.1
(22) Date of filing: 27.11.2007
(51) Int. Cl.: H04L 12/24, H04W 88/08

(54) **Method and device for data processing in a network and communication system comprising such device**

(71) Applicant: Nokia Siemens Networks Oy, 02610 Espoo (FI)
(72) Inventor: Lutterbach, Manfred, 86415 Mering (DE)
(74) Representative: Bruglachner, Thomas E.

(57) **Abstract**

A method and a device are provided for data processing in a network comprising several base stations, said method comprising the step of: At least one base station conveys at least one O&M message to at least one other base station. Further, a communication system comprising said device is provided.

## Description

The invention relates to a method and to a device for data processing in a network and to a communication system comprising such a device.

In future LTE (Long Term Evolution) mobile networks may comprise thousands of base station (in particular base transceiver stations, also referred to as "evolved NodeBs" or "eNBs"). Hence, a configuration of adjacencies among such base stations is of significant complexity.

LTE (also known as 3G+) is the successor of the 3GPP (third generation partnership project) networks. In UTRAN (UMTS Terrestrial Radio Access Network) networks, an RNC (Radio Network Controller) manages parts of the adjacencies for the NodeBs connected and for NodeBs of neighboring RNCs. The RNC's knowledge about adjacent NodeBs and adjacent cells is used to manage a handover (HO) of mobile phones between the respective NodeBs.

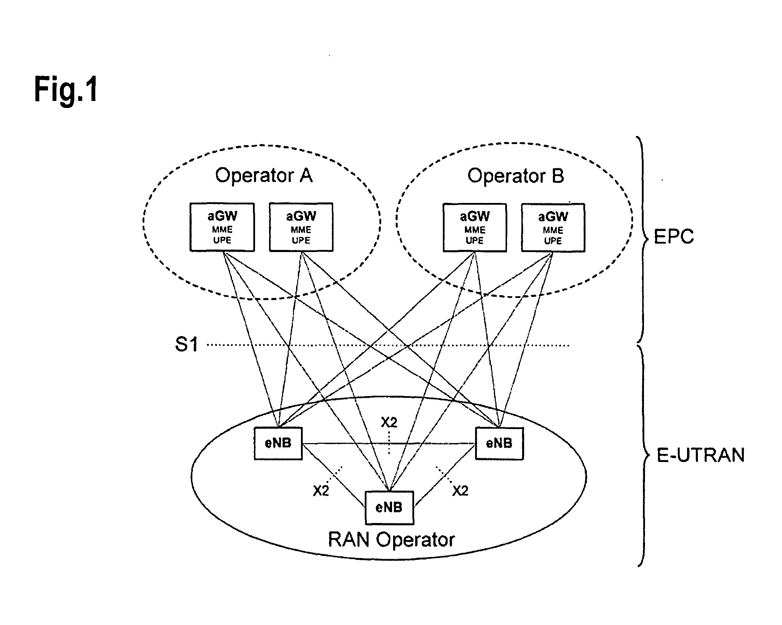

Unlike to the UTRAN scenario, in an LTE/SAE (System Architecture Evolution) network there is no RNC that exchanges "logical O&M" (Operation and Maintenance) data with its connected NodeBs. The evolved NodeBs (eNBs) of LTE/SAE are connected to an access gateway (aGW) via an S1 interface and to neighboring eNBs via an X2 interface (see **Fig.1****)**.

These S1 and X2 interfaces are no O&M interfaces, but they are defined for call processing (CP) purposes.

Due to the missing RNC functionality as described above, the management of the adjacency relations shall be provided by an element manager (EM) or by an Operation and Maintenance Center (OMC).

The eNB is the radio network element (NE) in the Evolved UTRAN (E-UTRAN). It will be managed by the EM via an Itf-eB O&M interface.

A huge number of adjacency relations is responsible for an enormous amount of Managed Object Instances (MOIs) in the information model. This has a tremendous impact on a start-up time as well as on other O&M operations.

So far, there does not exist any solution for LTE/SAE networks avoiding such delay as indicated during, e.g., a startup phase.

With UTRAN, adjacencies have been defined and planned in advance by a (offline) network planning tool. The result of planning was sent to the NodeBs via an Element Manager (also referred to as "Radio Commander"). It was also possible to configure adjacencies using a Local Maintenance Terminal (LMT). Radio Resource Management (RRM) is handled by the Radio Network Controller (RNC) for UTRAN. As mentioned above, in LTE/SAE networks there is no RNC to cover such management function.

The problem to be solved is to overcome the disadvantages as described before and in particular to provide an efficient approach for O&M messages to be conveyed throughout the network even in an LTE/SAE network comprising a huge number of evolved NodeBs.

This problem is solved according to the features of the independent claims. Further embodiments result from the depending claims.

In order to overcome this problem, a method is provided for data processing in a network comprising several base stations, said method comprising the step:
- at least one base station conveys at least one O&M message to at least one other base station.

This allows that the base stations exchange O&M messages, in particular O&M information (with one another) thereby reducing the overall O&M traffic compared to a centralized approach with an O&M center (OMC) receiving and/or distributing all O&M traffic.

It is to be noted that the base station refers to, e.g., a base transceiver station of a network, any kind of base station (of, e.g., a GSM or UMTS network) or NodeB. Furthermore, the base station may be an evolved NodeB ("eNodeB" or "eNB") as utilized, e.g., in an LTE/SAE network and/or environment.

In another embodiment, the O&M message is conveyed via a peer-to-peer O&M interface.

In a further embodiment, the several base stations or at least a portion thereof each are/is connected to an O&M center.

Hence, the O&M center (OMC) can additionally be provided for a predefined portion of tasks for further centralized operations or processing of O&M messages.

In a next embodiment, the O&M center is or is associated with a network element providing a centralized O&M function.

It is also an embodiment that each base station comprises a unique identifier. In particular each base station may obtain an IP address via a DHCP server.

Pursuant to another embodiment, the communication between the base stations is provided by a peer-to-peer-protocol.

According to an embodiment, the peer-to-peer-protocol is a JXTA protocol.

According to another embodiment, a base station utilizing an air interface determines an electric field strength between itself and at least one adjacent base station.

Pursuant to yet another embodiment, at least one base station utilizes information provided by a mobile terminal in order to obtain information regarding at least one additional base station.

Hence, a first base station may via said mobile terminal receive information regarding a second (adjacent) base station that cannot be successfully contacted by the first base station itself. As an example, there may be a valid radio interface between the mobile terminal and the first base station as well as between the mobile terminal and the second base station, but a direct communication between the first and second base station may be blocked due to, e.g., a building or properties of the landscape. The mobile terminal in such case may work as a relay unit conveying information from or about the second base station to the first base station (or vice versa).

The mobile terminal may be a cell phone or any device comprising a mobile interface pursuant to, e.g., 2G, 2.5G, 3G, WLAN, WiMAX or the like.

The problem stated above is also solved by a device for data processing comprising a processor unit that is equipped and/or arranged such that the method as described herein is executable on said processor unit.

According to an embodiment, the device is a communication device, in particular a base station, a NodeB or an eNodeB.

The problem stated supra is further solved by a communication system comprising the device as described herein.

Embodiments of the invention are shown and illustrated in the following figure:

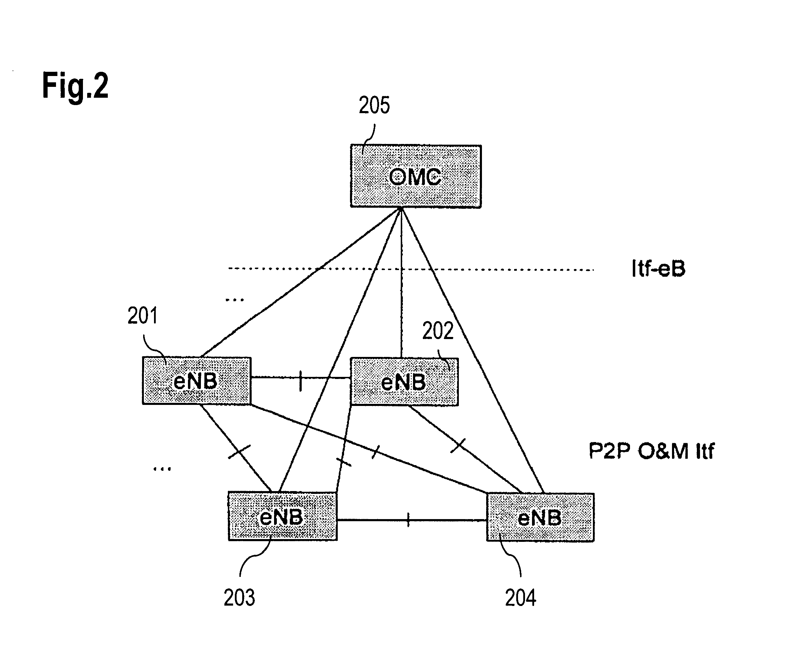

- Fig.2: shows evolved NodeBs (eNBs) that are connected with each other via P2P O&M interfaces.

According to the approach provided herewith, several evolved NodeBs may communicate with one another via a peer-to-peer (P2P) O&M interface.

**Fig.2** shows evolved NodeBs (eNBs) 201 to 204 that are connected with each other via P2P O&M interfaces. In addition, each eNB 201 to 204 is connected to an Operation & Maintenance Center OMC 205.

Parallel to the X2 interface for call processing (see Fig.1) O&M interfaces are provide for exchanging O&M information between the eNBs 201 to 204.

Instead of a centralized management of the adjacency relationships between the eNBs 201 to 204 processed by an element manager (EM) in a client/server architecture, the eNBs 201 to 204 may autonomously exchange information with each other.

In order to achieve this objective, each evolved NodeB 201 to 204 may in particular fulfill at least one of the following conditions:
a. The eNBs 201 to 204 need to be aware of each other. They may in particular comprise a unique identifier each and they will obtain their IP addresses via a DHCP server.
b. Each eNB 201 to 204 shall be able to exchange O&M information without the assistance of the element manager (EM).
c. Each eNB 201 to 204 may need to know rules and/or regulations to follow in order to create and/or maintain adjacency relationships.

When a new eNB is inserted into the network it may be configured by the element manager (EM). Instead of planning all adjacency relations for this change of the network (in advance) within the EM or within a network planning tool, the eNB may autonomously contact its peer eNBs and it may itself set up necessary adjacency relations using the rules implemented in this eNB. Such rules may in particular be part of the software and they may be updated if necessary by software update mechanisms.

The inter-eNB communication can be provided in particular according to the following possibilities:
1) JXTA is an open source P2P protocol specification (see, e.g., http://en.wikipedia.org/wiki/JXTA). JXTA^{™} technology is a set of open protocols that allow any connected device of the network ranging from cell phones and wireless PDAs to PCs and servers to communicate and collaborate in a P2P manner. JXTA peers create a virtual network that allows a peer to interact with other peers even when some of the peers and resources are behind firewalls and NATs or use different network transport mechanisms.
   The eNBs are accessible via an IP network. They build a peer group and exchange all necessary information. A geographical location could be one criterion for the membership in a peer group. Another criterion could be a quality of the radio links between mobile phones and the eNBs, which are analyzed during measurements between mobile phones and the eNBs during normal operation.
2) The second approach is that the neighboring eNBs use the air interface to detect each other. In a way similar to the communication between mobile phones and the base stations, an eNB may measure and utilize an electric field strength between itself and its neighboring eNBs.

The knowledge about the rules to determine the adjacencies may advantageously be implemented into software associated with or located in the eNB.

The described solution obviates a necessity for setting up adjacencies in the element manager (EM) and/or in the network planning program. Hence, there will be no need to explicitly configure adjacency relations on a network level thereby significantly simplifying network planning.

Furthermore, the amount of configuration data to be conveyed to the network elements due to network re-organization is significantly reduced.

## Claims

1. A method for data processing in a network comprising several base stations, said method comprising the step:
- at least one base station conveys at least one O&M message to at least one other base station.

2. The method according to claim 1, wherein the base stations exchange O&M messages with one another.

3. The method according to any of the preceding claims, wherein the base station is a NodeB or an evolved NodeB.

4. The method according to any of the preceding claims, wherein the O&M message is conveyed via a peer-to-peer O&M interface.

5. The method according to any of the preceding claims, wherein the several base stations or at least a portion thereof each is connected to an O&M center.

6. The method according to claim 5, wherein the O&M center is or is associated with a network element providing a centralized O&M function.

7. The method according to any of the preceding claims, wherein each base station comprises a unique identifier.

8. The method according to any of the preceding claims, wherein each base station obtains an IP address via a DHCP server.

9. The method according to any of the preceding claims, wherein the communication between the base stations is provided by a peer-to-peer-protocol.

10. The method according to claim 9, wherein the peer-to-peer-protocol is a JXTA protocol.

11. The method according to claim 9, wherein a base station utilizing an air interface determines an electric field strength between itself and at least one adjacent base station.

12. The method according to any of the preceding claims, wherein the base station is a base transceiver station of the network.

13. The method according to any of the preceding claims, wherein at least one base station utilizes information provided by a mobile terminal in order to obtain information regarding at least one additional base station.

14. A device for data processing comprising a processor unit that is arranged such that the method according of any of the preceding claims is executable on said processor unit.

15. The device according to claim 14, wherein said device is a communication device, in particular a base station, a NodeB or an eNodeB.

16. Communication system comprising the device according to any of claims 14 or 15.
